# EUROPÄISCHE PATENTSCHRIFT

(11) **EP 2 643 868 B1**
(45) Veröffentlichungstag und Bekanntmachung des Hinweises auf die Patenterteilung: **22.07.2015**
(21) Anmeldenummer: 11788797.6
(22) Anmeldetag: 22.11.2011
(51) Int. Cl.: H01M 2/02, H01M 2/04, H01M 6/04, H01M 6/12, H01M 12/06

(54) **GEHÄUSE FÜR QUECKSILBERFREIE KNOPFZELLEN**
HOUSING FOR MERCURY-FREE BUTTON CELLS
BOÎTIER POUR PILES-BOUTONS SANS MERCURE

(30) Priorität: 25.11.2010 DE 102010062001
(43) Veröffentlichungstag der Anmeldung: 02.10.2013
(73) Patentinhaber: VARTA Microbattery GmbH, 73479 Ellwangen (DE)
(72) Erfinder: AKCA, Kemal, 73479 Ellwangen (DE); CSRENKO, Cornelia, 73492 Rainau-Dalkingen (DE); KREIDLER, Bernd, 73479 Ellwangen (DE); FREUDENBERGER, Renate, 71409 Schwaikheim (DE)
(74) Vertreter: Patentanwälte Ruff, Wilhelm, Beier, Dauster & Partner
(86) Internationale Anmeldenummer: PCT/EP2011/070635
(87) Internationale Veröffentlichungsnummer: WO 2012/069449

(56) Entgegenhaltungen:
- EP-A1- 0 789 407
- WO-A1-2006/118791
- WO-A2-2008/057401
- JP-A- 61 061 364
- JP-A- 2001 307 739

## Beschreibung

Die vorliegende Erfindung betrifft ein Verfahren zur Herstellung eines innenseitig mit einer Kupferlegierung versehenen napfförmigen Gehäusehalbteils für das Gehäuse einer quecksilberfreien Knopfzelle.

Knopfzellen weisen üblicherweise ein Gehäuse aus zwei Gehäusehalbteilen, einem in der Regel napfförmig ausgebildeten Zellenbecher und einem häufig ebenfalls napfförmig ausgebildeten Zellendeckel, auf. Diese können beispielsweise aus vernickeltem Tiefziehblech als Stanzziehteile hergestellt werden. Üblicher ist es jedoch, als Gehäusewerkstoff ein plattiertes Verbundmaterial mit einer Lage Nickel, einer Lage Kupfer und einer dazwischenliegenden Lage aus Stahl bzw. Edelstahl zu verwenden (sogenanntes Trimetall). Gehäusehalbteile aus Trimetall sind beispielsweise der JP 61061364 A1 zu entnehmen. Ein zwischen den Gehäusehalbteilen angeordneter Kunststoffring dient in der Regel gleichzeitig als Dichtung und als Isolator, der die Gehäusehalbteile räumlich und elektrisch voneinander trennt. Gewöhnlich ist der Zellenbecher einer Knopfzelle positiv gepolt und der Zellendeckel negativ. Der flüssigkeitsdichte Verschluss solcher Zellen erfolgt meist durch Umbördeln des Randes des Zellenbechers.

Als negative Elektrode enthalten Knopfzellen häufig eine Paste oder ein Gel aus Zinkpulver. Als positive Gegenelektroden kommen dann beispielsweise Gasdiffusionselektroden (für Zink/Luft-Zellen) oder alternativ z.B. Manganoxid oder Silberoxid in Frage.

Als Elektrolyt kommt bei den genannten elektrochemischen Systemen in der Regel ein alkalischer Elektrolyt zum Einsatz, insbesondere konzentriertes wässriges Kaliumhydroxid. Die Gegenwart eines alkalischen Elektrolyten hat sowohl Vorteile als auch Nachteile. Zu den Nachteilen gehört insbesondere, dass Zink im alkalischen Milieu sehr leicht unter Wasserstoffbildung mit Wasser reagiert kann. Als Folge der Wasserstoffentwicklung kann die Zelle irreversibel geschädigt werden. Bis heute wird die Reaktion von Zink mit Wasser in alkalischen Zinkzellen durch Zugabe von Quecksilber reguliert. Aufgrund der Giftigkeit und Umweltschädlichkeit von Quecksilber ist diese Vorgehensweise in der Zukunft jedoch keine Option mehr.

Aus dem Stand der Technik sind quecksilberfreie Knopfzellen bekannt, bei denen die Innenseite der Knopfzellendeckel mit einer Schicht aus einer Kupfer-Zinn-, Kupfer-Zink- oder Kupfer-Indium-Legierung überzogen ist, um die Wasserstoffüberspannung zu erhöhen und die Wasserstoffentwickung auch bei Abwesenheit von Quecksilber auf einem akzeptablen Niveau zu halten. Die genannten Legierungen sind jedoch wenig duktil, so dass eine Herstellung von tiefgezogenen Deckeln ohne Aufbrechen der Legierungsschicht nicht möglich ist.

Aus der JP 2001307739 A ist es bekannt, Knopfzellendeckel aus dem gleichen Grund innenseitig mit einer Schicht aus Zinn zu überziehen.

In der WO 2008/057401 A2 ist beschrieben, als Stanzziehteile hergestellte Knopfzellendeckel zur Vermeidung von Gasungseffekten mit einer Schicht aus einer Kupfer-Zinn-Zink-Legierung zu überziehen. Diese Vorgehensweise beinhaltet allerdings einen aufwendigen Galvanisier- und einen anschließenden Trocknungsprozess.

Aus der EP 0 789 407 ist es bekannt, Knopfzellendeckel aus Trimetall zu formen und anschließend innenseitig mit Zinn zu beschichten. Vor dem Auftrag des Zinns müssen die zu beschichtenden Knopfzellendeckel allerdings aufwendig gereinigt werden.

Das Verfahren mit den Merkmalen des Anspruchs 1 bietet eine einfache und elegante Möglichkeit zur Bereitstellung von Knopfzellendeckeln, die innenseitig mit einer die Wasserstoffüberspannung erhöhenden Legierung überzogen sind. Eine bevorzugte Ausführungsform des erfindungsgemäßen Verfahrens ist im abhängigen Anspruch 2 angegeben.

Der Wortlaut sämtlicher Ansprüche wird hiermit durch Bezugnahme zum Inhalt dieser Beschreibung gemacht.

Das erfindungsgemäße Verfahren dient zur Herstellung eines innenseitig mit einer Kupferlegierung versehenen napfförmigen Gehäusehalbteils für das Gehäuse einer quecksilberfreien (Hg-freien) Knopfzelle. Es umfasst in der Regel die folgenden Schritte:
(1) In einem Schritt wird ein plattiertes Verbundmaterial bereitgestellt, das eine Lage Nickel, eine Lage Kupfer und eine dazwischenliegende Lage aus Stahl bzw. Edelstahl umfasst. Kupferseitig ist das Verbundmaterial mit einer zusätzlichen Schicht aus einem der Metalle Zinn, Zink, Indium, Bismut oder einer Legierung aus diesen Metallen versehen. Bevorzugt wurde diese zusätzliche Schicht auf die Lage Kupfer aufplattiert.
   Mit Plattieren bezeichnet man eine Vorgehensweise in der Metallverarbeitung, bei der ein Metall durch ein weiteres, häufig vergleichsweise edleres, Metall überdeckt wird. Beim obenliegenden Verbundmaterial wird eine Lage Stahl durch Nickel und Kupfer überdeckt. Zwischen den Metallen soll dabei eine möglichst untrennbare Verbindung entstehen. Zur Anwendung kommen hierfür die unterschiedlichsten Techniken wie z.B. das Aufwalzen oder Aufschweißen von Metallfolien oder die elektrochemische Abscheidung von metallischen Niederschlägen. Im letzteren Fall spricht man von Elektroplattieren.
   Erfindungsgemäß kommt als Verbundmaterial bevorzugt das bereits eingangs erwähnte Trimetall zum Einsatz. Bei Trimetall handelt es sich um eine Sonderplattierung, die speziell für die Gehäuse von Knopfzellen entwickelt wurde. Als Träger dient in der Regel eine dünne Folie aus niedrig gekohltem Stahl oder nicht rostendem Edelstahl. Die Dicke des Verbundmaterials liegt bevorzugt in dem Bereich zwischen 0,05 µm und 0,25 µm. Die Nickellage beansprucht dabei in der Regel zwischen 1 % und 15 % der Dicke des Verbundmaterials, die Kupferlage zwischen 5 % und 30 %. Der Anteil der Stahlfolie an der Dicke des Verbundmaterials beträgt entsprechend zwischen 55 % und 94 %.
   Dazu kommt natürlich noch die erwähnte Schicht aus einem der Metalle Zinn, Zink, Indium, Bismut oder einer Legierung aus diesen Metallen. Diese ist bevorzugt galvanisch auf die Kupferseite des Verbundmaterials aufgebracht, also durch Elektroplattieren. In bevorzugten Ausführungsformen beträgt ihre Dicke im Mittel zwischen 0,5 µm und 2 µm.
(2) Das gemäß (1) bereitgestellte, kupferseitig beschichtete Verbundmaterial liegt bevorzugt in Form eines Endlosbandes vor. Aus dem Verbundmaterial wird im zweiten Schritt ein napfförmiges Gehäusehalbteil geformt, wobei in Übereinstimmung mit den einleitenden Ausführungen zum Stand der Technik die Lage Nickel die Außenseite und die zusätzliche Schicht aus einem der Metalle Zinn, Zink, Indium, Bismut oder einer Legierung aus diesen Metallen die Innenseite des napfförmigen Gehäusehalbteils bildet. Bevorzugt wird das napfförmige Gehäusehalbteil durch einen Tiefzieh- oder Ausstanzprozess gebildet.
(3) Als weiteren Schritt umfasst das erfindungsgemäße Verfahren eine Wärmebehandlung des gemäß (2) gebildeten Gehäusehalbteils. Diese erfolgt erfindungsgemäß bei einer Temperatur, bei der die zusätzliche Schicht aus einem der Metalle Zinn, Zink, Indium, Bismut oder einer Legierung aus diesen Metallen mit dem Kupfer aus der Lage Kupfer legiert.

Die Wärmebehandlung wird bei einer Temperatur im Bereich zwischen 200 °C und 400 °C vorgenommen. Bei dieser Temperatur können die Metalle Zinn, Zink, Indium und/oder Bismut in die Lage Kupfer eindiffundieren, es bilden sich entsprechend Kupferlegierungen der entsprechenden Metalle. Da diese Kupferlegierungen erst nach der Bildung des napfförmigen Gehäusehalbteils entstehen, hat ihre geringe Duktilität keine negativen Auswirkungen.

Beim Eindiffundieren der genannten Metalle in die Kupferlage des Verbundmaterials verwischen die Grenzen zwischen der Kupferlage und der beschriebenen zusätzlichen Schicht. Die Kupferlage und die beschriebene zusätzliche Schicht werden bei diesem Prozess zu einer neuen Lage oder Schicht vereint.

Bevorzugt besteht die neue Lage oder Schicht allerdings nicht aus einer Legierung mit einer gleichmäßigen, einheitlichen Zusammensetzung. Beim erwähnten Eindiffundieren können sich stattdessen in Abhängigkeit der bei der Wärmebehandlung gewählten Parameter (insbesondere der Parameter "Temperatur"und "Zeit") Konzentrationsgradienten bilden. Solche Gradienten sind durch entsprechende Analysen der wärmebehandelten Gehäusehalbteile nachweisbar.

Eine Diffusion der Metalle Zinn, Zink, Indium und Bismut in die Kupferlage setzt in nennenswertem Umfang erst ab der genannten Mindesttemperatur von 200 °C, ein. Unterhalb dieser Temperatur sind die Diffusionskinetiken zu stark gehemmt.

Bevorzugt erfolgt die Wärmebehandlung über einen Zeitraum zwischen 1 Stunde und 10 Stunden.

Mit dem erfindungsgemäßen Verfahren lassen sich napfförmige Gehäusehalbteile herstellen, die aus einem plattierten Verbundmaterial umfassend eine Lage Nickel, eine Lage Stahl oder Edelstahl und eine Lage umfassend Kupfer legiert mit mindestens einem Metall aus der Gruppe mit Zinn, Zink, Indium und Bismut herstellen, wobei die Lage Nickel die Außenseite und die Lage mit der Kupferlegierung die Innenseite der napfförmigen Gehäusehalbteile bildet.

Wie bereits erwähnt, sind die Elemente Zink, Zinn, Indium und/oder Bismut innerhalb der die Innenseite bildenden Lage in bevorzugten Ausführungsformen keinesfalls überall in der gleichen Konzentration zu finden. Besonders zeichnen sich die erfindungsgemäßen Gehäusehalbteile entsprechend auch dadurch aus, dass innerhalb der die Innenseite bildende Lage die Konzentration an Kupfer mit größer werdendem Abstand zur Lage aus Stahl sinkt und die Konzentration an dem mindestens einen Element aus der Gruppe mit Zink, Zinn, Indium und Bismut in gleicher Richtung steigt.

Mit anderen Worten, das Kupfer ist innerhalb der Lage mit der Kupferlegierung zur Lage aus Stahl hin angereichert und zum Napfinneren hin abgereichert. Angereichert meint vorliegend, dass der lokale Gehalt an Kupfer nahe der Stahllage größer ist als der mittlere Gehalt an Kupfer in der Lage, während abgereichert bedeutet, dass der lokale Gehalt an Kupfer zum Napfinneren hin geringer ist als der mittlere Gehalt an Kupfer in der Schicht. Der mittlere Gehalt an Kupfer ergibt sich dabei aus dem Gewichtsverhältnis des Kupferanteils in der Lage zur Summe aller Anteile der Lage multipliziert mit dem Faktor 100.

In der Regel handelt es sich bei dem napfförmigen Gehäusehalbteil um den Zellendeckel einer Knopfzelle, insbesondere einer Knopfzelle mit einer zinkhaltigen Anode, insbesondere einer Zink/Luft-Knopfzelle. Die zinkhaltige Anode ist dabei in der Regel in dem erfindungsgemäßen napfförmigen Gehäusehalbteil angeordnet.

Weitere Merkmale der Erfindung ergeben sich aus der nachfolgenden Beschreibung der Zeichnungen, anhand derer die Erfindung noch einmal im Detail erläutert wird. Die nachfolgend beschriebenen bevorzugten Ausführungsformen dienen lediglich zur Erläuterung und zum besseren Verständnis der Erfindung und sind in keiner Weise einschränkend zu verstehen.

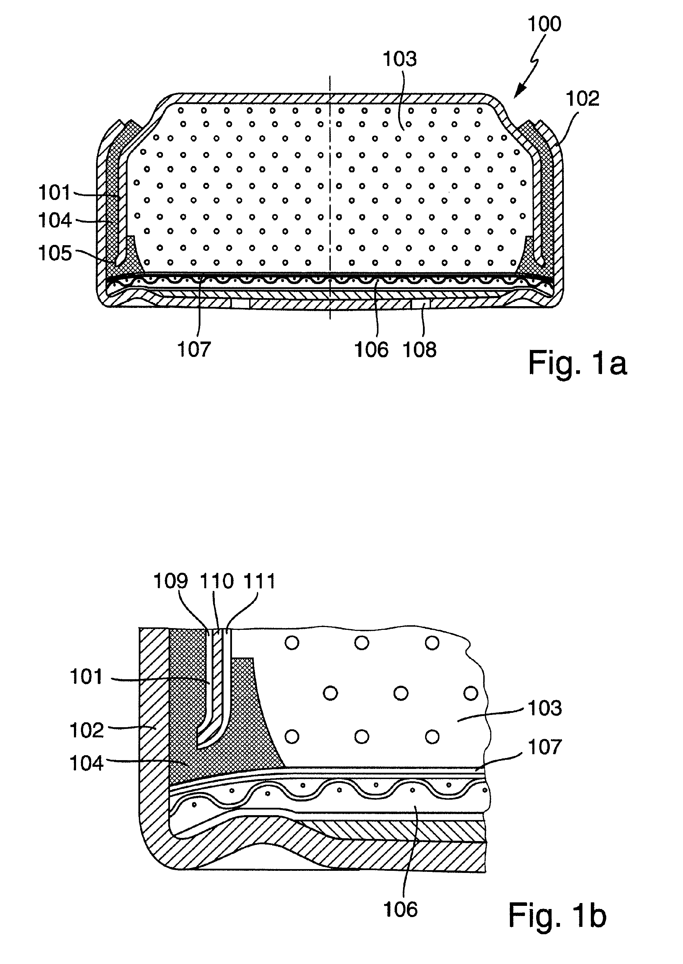

**Fig. 1a** zeigt eine Querschnittsdarstellung einer Ausführungsform einer Knopfzellen **100.** Diese weist den Zellendeckel **101** auf, der als napfförmiges Gehäusehalbteil ausgebildet ist und gemäß dem oben beschriebenen Verfahren hergestellt wurde. Darüber hinaus umfasst sie als zum Zellendeckel **101** korrespondierendes Gehäusehalbteil den ebenfalls napfförmigen Zellenbecher **102.** Diese bilden gemeinsam das Gehäuse der Knopfzelle **100.** Im Zellendeckel **101** ist eine Zinkpaste **103** als negative aktive Masse angeordnet. Diese ist frei von Quecksilber. Die Dichtung **104** isoliert den Zellendeckel **101** und den Zellenbecher **102** gegeneinander und dichtet gleichzeitig das Gehäuse nach außen ab. Sie umschließt die Schnittkante **105** des Zellendeckels **101.** Im Bodenbereich des Zellenbechers **102** eine Gasdiffusionselektrode **106** angeordnet. Diese ist durch den Separator **107** von der Zinkpaste **103** getrennt. Der Boden des Zellenbechers **102** weist die Lufteintrittsöffnungen **108** auf. Bei der dargestellten Knopfzelle handelt es sich entsprechend um eine Zink/Luft-Knopfzelle.
**Fig. 1b** zeigt einen vergrößerten Ausschnitt der in **Fig. 1a** dargestellten Knopfzelle **100.** Ausschnittsweise dargestellt sind der Zellenbecher **102** und der Zellendeckel **101** sowie die Dichtung **104,** die Zinkpaste **103,** die Gasdiffusionselektrode **106** und der Separator **107.** Der Zellendeckel **101** besteht aus einem Verbundmaterial umfassend eine Lage Nickel **109,** eine Lage Stahl **110** und eine Lage **111** umfassend Kupfer und einer Kupfer-Zinn-Legierung. Die einzelnen Lagen sind lediglich in der vergrößerten Darstellung dargestellt.

Die Lage **111** mit Kupfer und der Kupfer-Zinn-Legierung bildet die Innenseite des Zellendeckels **101** und steht in direktem Kontakt mit der Zinkpaste **103.** Die Lage **109** aus Nickel bildet die Außenseite des Zellendeckels.

Hergestellt wurde der Zellendeckel **101** aus einem kupferseitig mit einer Zusatzschicht aus Zinn versehenen Trimetall. Nach dem Ausstanzen des Zellendeckels **101** aus diesem Material wurde dieser über zwei Stunden auf eine Temperatur von ca. 200 °C erwärmt. Dabei bildete sich aus der Kupferseite des Trimetalls und der darauf angeordneten Zusatzschicht aus Zinn die Lage **111** umfassend Kupfer und die Kupfer-Zinn-Legierung. Durch Diffusion bildete sich innerhalb der entstehenden (gemeinsamen) Lage **111** ein Konzentrationsgefälle. Es wurde festgestellt, dass innerhalb der Lage **111** Kupfer zur Lage aus Stahl hin angereichert ist. Zum Napfinneren hin steigt dagegen die Konzentration an Zinn. Unmittelbar an der Grenze zwischen der Lage **110** und der Lage **111** war sogar noch unlegiertes Kupfer zu finden. So begründet sich auch die Verwendung des Ausdrucks Lage **111** "umfassend Kupfer und aus einer Kupfer-Zinn-Legierung" Die Zinnschicht auf der Kupferseite des Trimetalls wies vor der Wärmebehandlung eine Dicke im Bereich zwischen 0,2 µm und 5 µm auf. Die Zinnschicht war galvanotechnisch auf dem Trimetall abgeschieden worden.

## Patentansprüche

1. Verfahren zur Herstellung eines innenseitig mit einer Kupferlegierung versehenen napfförmigen Gehäusehalbteils einer quecksilberfreien Knopfzelle, umfassend die Schritte
(1) Bereitstellen eines plattierten Verbundmaterials mit einer Lage Nickel, einer Lage Kupfer und einer dazwischen liegenden Lage aus Stahl bzw. Edelstahl,
(2) Formen eines napfförmigen Gehäusehalbteils aus dem Verbundmaterial, wobei die Lage Nickel die Außenseite und eine Zusatzschicht die Innenseite des napfförmigen Gehäusehalbteils bildet,
**dadurch gekennzeichnet,**
**dass** das Verbundmaterial vor Schritt (2) kupferseitig mit der Zusatzschicht aus mindestens einem Metall aus der Gruppe mit Zinn, Zink, Indium und Bismut oder aus einer Legierung aus diesen Metallen versehen wird und das Gehäusehalbteil nach Schritt (2) bei einer Temperatur zwischen 200 °C und 400 °C, bei der das mindestens eine Metall aus der Gruppe mit Zinn, Zink, Indium und Bismut mit dem Kupfer aus der Kupferlage legiert, wärmebehandelt wird.

2. Verfahren nach Anspruch 1, **dadurch gekennzeichnet, dass** die Wärmebehandlung über einen Zeitraum zwischen 1 Stunde und 10 Stunden erfolgt.

## Claims

1. A method for producing a bowl-shaped housing half-part provided with a copper alloy on the inside of a mercury-free button cell, comprising the steps:
(1) providing a clad composite material with a layer of nickel, a layer of copper and an intermediate layer of steel or high-grade steel,
(2) shaping of a bowl-shaped housing half-part made of the composite material, wherein the layer of nickel forms the outside and an additional layer forms the inside of the bowl-shaped housing half-part,
**characterized in that**
the composite material is provided, prior to step (2), on the copper side with the additional layer composed of at least one metal from the group consisting of tin, zinc, indium and bismuth or of an alloy composed of said metals, and the housing half-part, subsequent to step (2), is heat treated at a temperature between 200 °C and 400 °C, where the at least one metal from the group consisting of tin, zinc, indium and bismuth is alloyed with the copper of the copper layer.

2. The method according to claim 1, **characterized in that** the heat treatment is effected for a time period between 1 hour and 10 hours.

## Revendications

1. Procédé de fabrication d'une demi-pièce de boîtier d'une pile-bouton sans mercure en forme de cuvette et pourvue d'un alliage de cuivre du côté intérieur, comprenant les étapes suivantes :
(1) fourniture d'un matériau composite plaqué avec une couche de nickel, une couche de cuivre et une couche intermédiaire d'acier ou d'acier inoxydable,
(2) formation d'une demi-pièce de boîtier en forme de cuvette à partir du matériau composite, la couche de nickel formant le côté extérieur et une couche supplémentaire formant le côté intérieur de la demi-pièce de boîtier en forme de cuvette,
**caractérisé en ce que** le matériau composite, avant l'étape (2), est pourvu du côté du cuivre de la couche supplémentaire constituée d'au moins un métal appartenant au groupe de l'étain, du zinc,
de l'indium et du bismuth ou constituée d'un alliage constitué de ces métaux et la demi-pièce de boîtier, après l'étape (2), est soumise à un traitement thermique à une température comprise entre 200 °C et 400 °C, à laquelle l'au moins un métal appartenant au groupe de l'étain, du zinc, de l'indium et du bismuth est allié avec le cuivre de la couche de cuivre.

2. Procédé selon la revendication 1, **caractérisé en ce que** le traitement thermique s'effectue pendant un intervalle de temps compris entre 1 heure et 10 heures.
